# EUROPÄISCHE PATENTSCHRIFT

(11) **EP 3 392 463 B1**
(45) Veröffentlichungstag und Bekanntmachung des Hinweises auf die Patenterteilung: **03.06.2020**
(21) Anmeldenummer: 18165706.5
(22) Anmeldetag: 04.04.2018
(51) Int. Cl.: F01D 11/00, F01D 25/12, F01D 11/02

(54) **STRÖMUNGSMASCHINE**
FLOW ENGINE
TURBOMACHINE

(30) Priorität: 21.04.2017 DE 102017108581
(43) Veröffentlichungstag der Anmeldung: 24.10.2018
(73) Patentinhaber: Rolls-Royce Deutschland Ltd & Co KG, 15827 Blankenfelde-Mahlow (DE)
(72) Erfinder: Motsch, Sebastian, 15827 Blankenfelde-Mahlow (DE); Pannier, Stephan, 15827 Blankenfelde-Mahlow (DE)
(74) Vertreter: Schmidt, Martin Michael

(56) Entgegenhaltungen:
- EP-A1- 2 365 235
- FR-A1- 2 961 249
- FR-A1- 2 973 433
- US-A1- 2009 129 916

## Beschreibung

Die Erfindung betrifft eine Strömungsmaschine, insbesondere ein Strahltriebwerk eines Flugzeugs, mit einer Rotorvorrichtung und einer Statorvorrichtung, wobei zwischen der Rotorvorrichtung und der Statorvorrichtung eine Dichteinrichtung angeordnet ist, gemäß der im Oberbegriff des Patentanspruches 1 näher definierten Art.

Aus der DE 10 2011 014 292 A1 ist ein Gasturbinentriebwerk bekannt, bei dem in radialer Richtung zwischen einer Statoreinrichtung und einer Rotoreinrichtung eine Dichteinrichtung angeordnet ist, welche verdrehfest mit der Rotoreinrichtung verbunden ist. Die Dichteinrichtung weist einen Trägerarm und auf einer der Statoreinrichtung zugewandten Seite des Trägerarms Dichtlippen auf. Die Statoreinrichtung ist in einem radial inneren Bereich mit einer Einlaufschicht ausgeführt, die zum Zusammenwirken mit der Dichteinrichtung vorgesehen ist. Der Trägerarm mit den Dichtlippen weist ein freies Ende auf, das sich im Betrieb beispielsweise aufgrund von Bewegungen und/oder thermischen Ausdehnungen der Rotoreinrichtung und/oder einer temperaturbedingt reduzierten Eigenspannung der Dichteinrichtung in radialer Richtung auf die Statoreinrichtung zu bewegen kann.

Eine Auslegung der Dichteinrichtung und eines Laufspalts gegenüber der Statorvorrichtung erfolgt in der Praxis anhand der jeweils vorliegenden Rahmenbedingungen und ist durch die im Betrieb vorliegenden Temperaturen und Spannungen im Bereich der Dichteinrichtung limitiert.

Zur Reduzierung eines unerwünscht starken Kontakts der rotierenden Dichteinrichtung mit der Einlaufschicht erfolgt seitens der Statorvorrichtung entweder eine hinreichende statische Auslegung des Laufspalts oder auch eine aktive Spalthaltung durch kontrollierte Bewegungen des Stators bzw. eine kontrollierte Deformation des Gehäuses.

Eine bekannte Maßnahme zur Verringerung des Kontakts zwischen Dichtlippen der Dichteinrichtung und einem Stator besteht in der Auslegung von relativ großen Spalten, wobei dies in nachteilhafter Weise betriebszustandsabhängig zu unerwünschten Luftsystemverlusten führt.

Eine alternative Maßnahme ist eine Einlaufbeschichtung der Dichtlippe, um bei relativ geringer Spaltgröße eine Abrasion der Dichtlippe und/oder der Einlaufschicht der Statoreinrichtung zu minimieren und hiermit die Lebensdauer der Komponenten und die Wartungsintervalle zu verlängern. Nachteilig ist hier jedoch, dass Fertigung, Wartung, Reparatur und Betrieb der Dichteinrichtung aufwändig und teuer sind.

Zudem wird in der Praxis auch eine Auslegung unter Berücksichtigung von Service-Intervallen durchgeführt, wobei jedoch eine kurze Lebensdauer der Dichteinrichtung in Kauf genommen werden muss.

Eine weitere Möglichkeit der Spalthaltung gegenüber dem Stator besteht darin, die Dichteinrichtung besonders massiv auszuführen und hierdurch eine Senkung des Spannungsniveaus der Dichteinrichtung zu erzielen und deren Verformung im Betrieb zu reduzieren. Derartige Dichteinrichtungen haben allerdings nachteilhafterweise ein hohes Gewicht.

Aus der FR 2 973 433 A1, der US 2009/129916 A1, der EP 2 365 235 A1 und der FR 2 961 249 A1 ist jeweils eine Strömungsmaschine mit einer Rotorvorrichtung und mit einer Statorvorrichtung bekannt, wobei zwischen der Rotorvorrichtung und der Statorvorrichtung jeweils eine Dichteinrichtung vorgesehen ist.

Der Erfindung liegt die Aufgabe zugrunde, eine Strömungsmaschine der eingangs näher bezeichneten Art derart auszubilden, dass eine rotorfeste Dichteinrichtung gegenüber einer Statorvorrichtung im Betrieb eine Position einnimmt, in der Luftsystemverluste minimiert werden, wobei die Dichteinrichtung einfach, wartungsarm und mit geringer Masse ausgeführt werden kann.

Erfindungsgemäß wird die Aufgabe mit einer gemäß den Merkmalen des Patentanspruchs 1 ausgebildeten Strömungsmaschine gelöst.

Es wird eine Strömungsmaschine, insbesondere ein Strahltriebwerk eines Flugzeugs, mit einer Rotorvorrichtung und einer Statorvorrichtung vorgeschlagen, wobei vorzugsweise in radialer Richtung zwischen der Rotorvorrichtung und der Statorvorrichtung eine Dichteinrichtung angeordnet ist, die einen sich im Wesentlichen in axialer Richtung erstreckenden, mit der Rotorvorrichtung drehfest verbundenen Trägerarm aufweist. Der Trägerarm weist auf seiner der Statorvorrichtung zugewandten Seite eine Dichtlippe und an seiner radial inneren Seite eine Überdeckung mit einer angrenzenden Oberfläche der Rotorvorrichtung auf. In einem Bereich der Überdeckung des Trägerarms der Dichteinrichtung mit der Rotorvorrichtung ist in der Oberfläche der Rotorvorrichtung wenigstens eine Kühlluftöffnung angeordnet.

Die Oberfläche der Rotorvorrichtung bildet im Bereich der Überdeckung mit dem Trägerarm der Dichteinrichtung zwei in axialer Richtung beabstandete Auflagebereiche für den Trägerarm. Die wenigstens eine Kühlluftöffnung ist in axialer Richtung zwischen den Auflagebereichen angeordnet. Des Weiteren weist die Rotorvorrichtung außerhalb der Überdeckung des Trägerarmes der Dichteinrichtung mit der Rotorvorrichtung weitere Kühlluftöffnungen auf, über die Kühlluft in einen die Dichteinrichtung umgebenden Raum führbar ist.

Zusätzlich ist der Trägerarm betriebszustandsabhängig in eine Position verlagerbar, in der ein Endbereich des Trägerarms zu dem stromabwärtigen Auflagebereich an der Rotoroberfläche beabstandet ist und in der die Dichtlippe mit einer Einlaufschicht der Statorvorrichtung in Anlage kommen kann.

Mit der erfindungsgemäßen Lösung wird eine Dichtung bereitgestellt, bei der ein sogenannter Laufspalt zwischen der Dichteinrichtung und der Statorvorrichtung auf einfache und kostengünstige Weise klein eingestellt und gehalten werden kann, so dass eine im Betrieb in axialer Richtung durch den Spalt geführte Luftströmung sehr gering ist und ein effizientes Dichtverhalten mit einem damit einhergehenden hohen Wirkungsgrad erzielt ist.

Dies wird erreicht, indem eine durch Betriebslasten bedingte Erwärmung und ggf. Deformation der Dichteinrichtung durch eine aktive Kühlung reduziert wird. Durch das Vorsehen der Kühlluftöffnung wird die fest mit der Rotorvorrichtung verbundene Dichteinrichtung im Betrieb direkt mit Kühlluft beaufschlagt, so dass auch bei hohen Betriebstemperaturen eine unerwünscht starke Erwärmung der Dichteinrichtung verhindert ist und auftretende Temperaturen gegenüber bekannten Lösungen reduziert sind. Hierdurch wird eine im Betrieb auftretende Spannungsbelastung und Deformation der Dichteinrichtung vorteilhafterweise reduziert, so dass die Dichteinrichtung eine vergleichsweise hohe Lebensdauer auch ohne das Vorsehen einer Einlaufbeschichtung aufweist.

Die Dichteinrichtung kann auch in vorteilhafter Weise klein und leicht ausgeführt werden, wobei hierdurch auftretende Steifigkeitsreduktionen durch die Kühlung der Dichteinrichtung kompensiert werden. Die mögliche Reduktion an Materialdicke und Masse kann zu strukturell besonders flexiblen bzw. dünnen Dichteinrichtungen und/oder Trägerarmen führen, die auch auf kleinen, separaten Anbauteilen angeordnet werden können.

Bei der erfindungsgemäßen Lösung ist weiterhin die Betriebssicherheit erhöht, da eine Belastung der Dichteinrichtung durch die Kühlung reduziert ist. Selbst ein Versagen der Dichteinrichtung, welches mit bekannten Mitteln wie z. B. der Detektion von Vibrationen infolge einer Unwucht festgestellt werden kann, und für das eine deutlich geringere Wahrscheinlichkeit als bei bekannten Ausführungen besteht, hätte eine nur geringe Auswirkung auf das Verhalten des Gesamtsystems der Strömungsmaschine, da aufgrund der geringen Masse der Dichteinrichtung keine im Fehlerfall mit hoher Energie austretenden Teile entstehen.

Die Oberfläche der Rotorvorrichtung bildet im Bereich der Überdeckung mit dem Trägerarm der Dichteinrichtung Auflagebereiche für den Trägerarm. Hierdurch ist eine günstige Abstützung der Dichteinrichtung an der Rotorvorrichtung geschaffen, wobei der Trägerarm in sämtlichen Betriebszuständen zumindest bereichsweise, insbesondere an seinem dem freien Ende abgewandten Bereich, auf der Rotorvorrichtung aufliegt.

Es ist eine günstige Abstützung der Dichteinrichtung an der Rotorvorrichtung insbesondere in einer Grundposition der Dichteinrichtung geschaffen, da die Oberfläche der Rotorvorrichtung im Bereich der Überdeckung mit dem Trägerarm der Dichteinrichtung zwei in axialer Richtung beabstandete Auflagebereiche für den Trägerarm bildet, wobei die wenigstens eine Kühlluftöffnung in axialer Richtung zwischen den Auflagebereichen angeordnet ist.

Bei einer vorteilhaften Weiterbildung der Erfindung ist zwischen den axial beabstandeten Auflagebereichen ein in Umfangsrichtung umlaufender Kühlluftkanal bzw. Ringkanal zwischen dem Trägerarm und der angrenzenden Oberfläche der Rotorvorrichtung ausgebildet, in den die wenigstens eine Kühlluftöffnung mündet. Auf diese Weise ist die Dichteinrichtung bzw. deren Trägerarm in sämtlichen Betriebszuständen umfangsseitig vollständig mit Kühlluft versorgbar.

Um eine ausreichende Kühlung der Dichteinrichtung zu erzielen, weist die Rotorvorrichtung in einer vorteilhaften Ausführung in Umfangsrichtung verteilt mehrere Kühlluftöffnungen auf, welche z. B. in Umfangsrichtung gleichverteilt angeordnet und kreisförmig oder schlitzförmig ausgebildet sein können.

Die Anzahl und Größe der Kühlluftöffnungen ist vorzugsweise derart gewählt, dass im Betrieb eine thermisch bedingte maximale radiale Bewegung des Trägerarms der Dichteinrichtung in Richtung der Statorvorrichtung auf ein vordefiniertes Maß begrenzt ist. Dabei kann ein Abheben eines freien Endes des Trägerarms und hiermit die Freigabe einer Kühlluftpassage aus dem Einmündungsbereich der Kühlluftbohrungen eine gewollte thermisch induzierte Bewegung im Rahmen der aktiven Kühlung der Dichteinrichtung darstellen.

Die Dichteinrichtung ist auf vorteilhaft einfache Weise herstellbar, wenn die Dichteinrichtung ein separates Bauteil darstellt, das durch ein geeigneten Befestigungsmittel, z. B. eine Flanschverschraubung, mit der Rotorvorrichtung verbunden ist. Beispielsweise kann die Dichteinrichtung zwischen Auslegern, so genannten Drive Arms, zweier axial hintereinander angeordneter Rotoren der Rotorvorrichtung angeordnet sein.

Alternativ hierzu kann es auch vorgesehen sein, dass die Dichteinrichtung integral mit einem Bauteil der Rotorvorrichtung, insbesondere eines Auslegers bzw. Drive Arm zwischen zwei axial hintereinander platzierten Scheibenrädern oder einer Platte einer Rotorvorrichtung, ausgeführt sein.

Sowohl die in den Patentansprüchen angegebenen Merkmale als auch die in den nachfolgenden Ausführungsbeispielen der erfindungsgemäßen Strömungsmaschine angegebenen Merkmale sind jeweils für sich alleine oder in beliebiger Kombination miteinander geeignet, den erfindungsgemäßen Gegenstand weiterzubilden. Der Schutzumfang ist jedoch ausschließlich durch die Ansprüche bestimmt.

Weitere Vorteile und vorteilhafte Ausführungsformen der erfindungsgemäßen Strömungsmaschine ergeben sich aus den Patentansprüchen und aus den nachfolgend unter Bezugnahme auf die Zeichnung prinzipmäßig beschriebenen Ausführungsbeispielen, wobei in der Beschreibung der Ausführungsbeispiele zugunsten der Übersichtlichkeit für bau- und funktionsgleiche Bauteile dieselben Bezugszeichen verwendet werden.

Es zeigt:
- Fig. 1: eine vereinfachte Schnittdarstellung eines Strahltriebwerks mit einem Bläser, einer Verdichtereinrichtung, einem Brenner und einer Turbineneinrichtung;
- Fig. 2: eine stark schematisierte Darstellung eines Bereichs der Verdichtereinrichtung des Strahltriebwerks gemäß Fig. 1, wobei eine Rotorvorrichtung, eine Statorvorrichtung und eine erste Ausführungsform einer Dichteinrichtung ersichtlich sind; und
- Fig. 3: ein Fig. 2 entsprechender Bereich der Verdichtereinrichtung gemäß Fig. 1 mit einer zweiten Ausführungsform einer Dichteinrichtung.

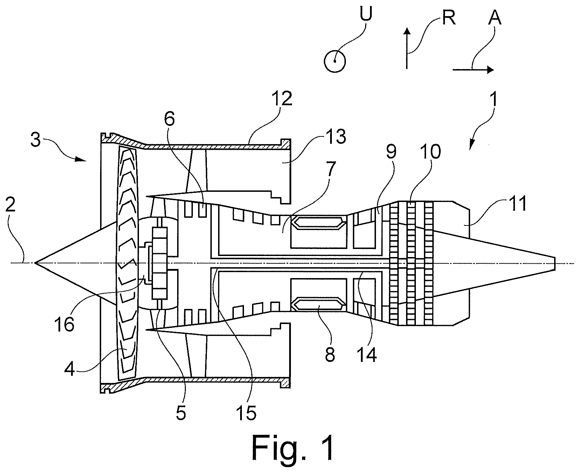

In Fig. 1 ist eine als Strahltriebwerk 1 eines Flugzeugs ausgeführte Strömungsmaschine gezeigt. Das Strahltriebwerk 1 weist eine Haupt- und Drehachse 2 auf. Des Weiteren umfasst das Strahltriebwerk 1 in axialer Strömungsrichtung einen Lufteinlass 3, einen Bläser 4, ein Planetengetriebe 5, einen Zwischendruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Strahltriebwerk 1 und begrenzt den Einlass 3.

Das Strahltriebwerk 1 arbeitet in herkömmlicher Weise, wobei in den Einlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Zwischendruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende Druckluft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Zwischendruckverdichter 6 an. Die die Niederdruckturbine 10 mit dem Zwischendruckverdichter 6 koppelnde Niederdruckwelle 15 treibt den Bläser 4 über das Planetengetriebe 5 an, wobei ein über die Niederdruckwelle 15 an dem Planetengetriebe 5 anliegendes Antriebsmoment der Standübersetzung des Planetengetriebes 5 entsprechend angehoben und einer Bläserwelle 16 zugeführt wird, während die Drehzahl der Niederdruckwelle 15 um den Faktor der Standübersetzung des Planetengetriebes 5 größer ist als die Drehzahl der Bläserwelle 16. Wenn der Bläser 4 von der Niederdruckturbine 10 angetrieben wird, wird die Drehzahl der Niederdruckwelle 15 der Übersetzung des Planetengetriebes 5 im Bereich des Planetengetriebes 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

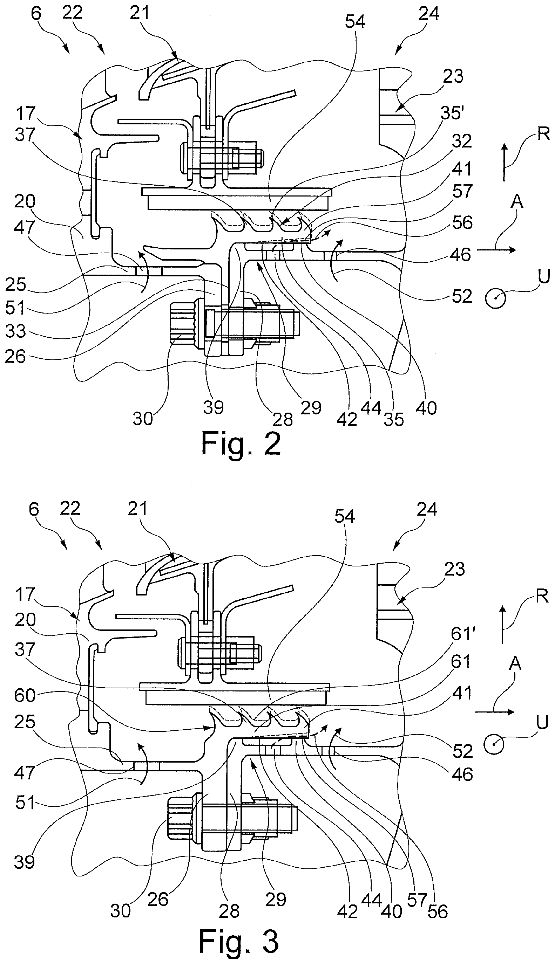

Die Fig. 2 und Fig. 3 zeigen einen Ausschnitt des Zwischendruckverdichters 6, wobei eine Statorvorrichtung 21 und eine Rotorvorrichtung 17 mit einem ersten Rotor bzw. Schaufelrad 20 einer Stufe 22 des Zwischendruckverdichters 6 und mit einem axial nachgeordneten zweiten Rotor 23 einer weiteren Stufe 24 des Zwischendruckverdichters 6 näher ersichtlich sind. Der Rotor 20 weist einen im Wesentlichen in axialer Richtung A des Strahltriebwerks 1 verlaufenden Ausleger bzw. Drive Arm 25 auf, der Teil eines röhrenförmigen Abschnitts der Rotorvorrichtung 17 ist. An den Ausleger 25 schließt sich in einem dem zweiten Rotor 23 zugewandten Bereich ein im Wesentlichen in radialer Richtung R des Strahltriebwerks 1 verlaufender Flansch 26 an, der einen kreisscheibenförmigen Bereich des Rotors 20 bildet. Der zweite Rotor 23 weist in einem dem ersten Rotor 20 zugewandten Bereich einen sich im Wesentlichen in radialer Richtung R erstreckenden Schenkel bzw. Flansch 28 auf, der einen kreisscheibenförmigen Bereich bildet und mit einem sich im Wesentlichen in axialer Richtung A erstreckenden Ausleger bzw. Drive Arm 29 des zweiten Rotors 23 verbunden ist. Die Ausleger und Flansche 25, 26, 28, 29 sind bei der gezeigten Ausführung insbesondere blechartig mit einer im Wesentlichen konstanten Wandstärke ausgeführt.

Die Rotoren 20, 23 sind im Bereich der Flansche 26, 28 mittels einer Schraubenverbindung 30 miteinander verbunden, wobei in der in Fig. 2 gezeigten Ausführung in axialer Richtung A zwischen den Flanschen 26, 28 ein sich im Wesentlichen in radialer Richtung R erstreckender Schenkel bzw. Flansch 33 einer Dichteinrichtung 32 angeordnet ist.

Die Dichteinrichtung 32 ist im Längsquerschnitt mit einem winkelförmigen Profil ausgeführt, welches den Flansch 33 in radialer Richtung R und einen axialen Schenkel 35 aufweist, der sich vorliegend stromab des Flanschs 33 erstreckt.

Der stromabwärtige Schenkel 35 bildet einen Trägerarm, der sich axial mit einem Bereich des Auslegers 29 des zweiten Rotors 23 überdeckt und auf einer der Rotorvorrichtung 17 abgewandten Seite und somit auf einer der Statorvorrichtung 21 zugewandten Seite eine Dichtlippe 37 mit mehreren Dichtungsspitzen aufweist.

Der Ausleger 29 des Rotors 23 weist vorliegend zwei Auflagebereiche 39, 40 auf, an denen der Trägerarm 35 in einer Grundposition der Dichteinrichtung 32, die die Dichteinrichtung 32 ohne Betriebslasten einnimmt, anliegt. Die Auflagebereiche 39, 40 sind in axialer Richtung A beabstandet zueinander angeordnet, wobei ein erster Auflagebereich 39 mit einem dem Flansch 33 zugewandten Bereich des Trägerarms 35 zusammenwirkt und hier in axialer Richtung A betrachtet im Wesentlichen im Bereich des Flanschs 28 des Rotors 23 angeordnet ist. Der zweite Auflagebereich 40 der Rotorvorrichtung 17 dient zur Auflage eines axial stromabwärtigen, freien Endbereichs 41 des Trägerarms 35.

In axialer Richtung A zwischen dem ersten Auflagebereich 39 und dem zweiten Auflagebereich 40 ist der Trägerarm 35 in der Grundposition der Dichteinrichtung 32 in radialer Richtung R von der überdeckten Oberfläche der Rotorvorrichtung 17 bzw. dem Ausleger 29 des Rotors 23 beabstandet, so dass hierdurch ein vorliegend in Umfangsrichtung U umlaufender Ringkanal bzw. Kühlluftkanal 42 gebildet ist. In den Ringkanal 42 münden eine oder mehrere Kühlluftöffnungen 44, die den Ausleger 29 in radialer Richtung R durchdringen. Vorliegend sind dabei eine Vielzahl von Kühlluftöffnungen 44 vorgesehen, die in Umfangsrichtung U gleichmäßig verteilt angeordnet sind.

Die Kühlluftöffnungen 44 sind mithin in axialer Richtung A betrachtet in einem Bereich des Auslegers 29 des Rotors 23 angeordnet, in dem auch der Trägerarm 35 der Dichteinrichtung 32 angeordnet ist, so dass im Betrieb durch die Kühlluftöffnung 44 geführte Kühlluft direkt auf die Dichteinrichtung 32 trifft.

Neben den Kühlluftöffnungen 44 weist der Ausleger 29 des Rotors 23 weitere, den Ausleger 29 in radialer Richtung R durchdringende Kühlluftöffnungen 46 auf, die in axialer Richtung A stromab der Dichteinrichtung 32 angeordnet sind und somit nicht mehr in dem Überdeckungsbereich von Dichteinrichtung 32 und Rotorvorrichtung 17 liegen.

Zudem weist der Ausleger 25 des stromaufwärtigen Rotors 20 eine Vielzahl von in Umfangsrichtung U verteilt angeordneten Kühlluftöffnungen 47 auf. Im Betrieb des Strahltriebwerks 1 strömt somit Kühlluft auch durch diese Kühlluftöffnungen 46 und 47 gemäß den Pfeilen 51, 52 in einen die Dichteinrichtung 32 umgebenden Raum.

Im Betrieb des Strahltriebwerks 1 liegen im Bereich der Dichteinrichtung 32 hohe Temperaturen vor und es greifen große Fliehkräfte an der Dichteinrichtung 32, insbesondere an dem Trägerarm 35, an, so dass der Trägerarm 35 betriebszustandsabhängig gegebenenfalls in eine vereinfacht strichliert gezeigt Position 35' verlagert werden kann, in der der Endbereich 41 des Trägerarms 35 zu dem stromabwärtigen Auflagebereich 40 an der Rotoroberfläche beabstandet ist, und in der die Dichtlippen 32 hier mit einer Einlaufschicht 54 der Statorvorrichtung 21 in Anlage kommen können.

Die durch Betriebslasten bedingte und thermisch dominierte Deformation des Trägerarms 35 kann durch die aktive rotorseitige Kühlung, bei der Kühlluft durch die Kühlluftöffnungen 44 in den Ringkanal 42 zur Kühlung des Trägerarms 35 gelangt, gezielt reduziert bzw. eingestellt werden.

Beispielsweise bei einem Start eines mit dem Strahltriebwerk 1 ausgeführten Flugzeugs, in einem sogenannten Take-off-Betriebszustand, können auf den Trägerarm 35 Kräfte und Temperaturen wirken, die diesen in die strichliert gezeigte Position 35' verlagern. Bei einer derartigen Verlagerung des Trägerarms 35 und einem Abheben von seiner rotorseitigen Auflagefläche wird der Ringkanal 42 zu seiner Umgebung hin geöffnet, so dass Kühlluft gemäß dem Pfeil 56 von dem Ringkanal 42 durch eine Kühlluftpassage 57 in den umgebenden Raum geführt wird und ein zusätzlicher Kühlluftstrom zur Kühlung der Dichteinrichtung 32 vorliegt.

Durch das Vorsehen der Kühlluftöffnungen 44 kann ein in der Grundposition der Dichteinrichtung 32 in radialer Richtung R zwischen den Dichtlippen 37 und der Einlaufschicht 54 der Statorvorrichtung 21 vorliegender Spalt vorteilhaft klein gewählt werden, wobei die Dichteinrichtung 32 bzw. der Trägerarm 35 in radialer Richtung R mit geringer Materialstärke und mit einer geringen thermische Trägheit ausgeführt sein kann.

In Fig. 3 ist eine weitere Ausführungsform einer Dichteinrichtung 60 gezeigt, wobei im Folgenden lediglich auf die Unterschiede zu der Dichteinrichtung 32 eingegangen wird und ansonsten auf die obigen Ausführungen verwiesen wird.

Die Dichteinrichtung 60 ist integral mit der Rotorvorrichtung 17, hier mit dem Ausleger 25 des stromaufseitigen Rotors 20 ausgeführt, wobei die Rotoren 20, 23 über die Schraubenverbindung 30 im Bereich der Flansche 26 und 28 direkt miteinander verbunden sind, so dass die Flansche 26, 28 der Rotoren 20, 23 direkt aneinander anliegen. Die Dichteinrichtung 60 weist wiederum einen Trägerarm 61 auf, der im Wesentlichen vergleichbar zu dem Trägerarm 35 mit einer Dichtlippe 37 ausgeführt ist.

Bei alternativen Ausführungen der Erfindung kann die Dichteinrichtung auch im Bereich eines Hochdruckverdichters oder im Bereich einer Turbine, insbesondere einer Niederdruckturbine oder einer Hochdruckturbine, angeordnet sein.

### Bezugszeichenliste

- 1: Strömungsmaschine; Strahltriebwerk
- 2: Hauptdrehachse
- 3: Lufteinlass
- 4: Bläser
- 5: Planetengetriebe
- 6: Zwischendruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 17: Rotorvorrichtung
- 20: Rotor
- 21: Statorvorrichtung
- 22: Stufe
- 23: Rotor
- 24: weitere Stufe
- 25: Ausleger der Rotorvorrichtung (drive arm)
- 26: Flansch der Rotorvorrichtung
- 28: Flansch der Rotorvorrichtung
- 29: Ausleger der Rotorvorrichtung (drive arm)
- 30: Schraubenverbindung
- 32: Dichteinrichtung
- 33: Flansch der Dichteinrichtung
- 35: Schenkel der Dichteinrichtung; Trägerarm
- 37: Dichtlippe
- 39: erster Auflagebereich
- 40: zweiter Auflagebereich
- 41: Endbereich des Trägerarms
- 42: Ringkanal
- 44: Kühlluftöffnung
- 46: Kühlluftöffnung
- 47: Kühlluftöffnung
- 51, 52: Pfeil
- 54: Einlaufschicht
- 56: Pfeil
- 57: Kühlluftpassage
- 60: Dichteinrichtung
- 61: Trägerarm
- A: axiale Richtung
- R: radiale Richtung
- U: Umfangsrichtung

## Patentansprüche

1. Strömungsmaschine (1), insbesondere Strahltriebwerk eines Flugzeugs, mit einer Rotorvorrichtung (17) und einer Statorvorrichtung (21), wobei zwischen der Rotorvorrichtung (17) und der Statorvorrichtung (21) eine Dichteinrichtung (32; 60) angeordnet ist, die einen sich im Wesentlichen in axialer Richtung (A) erstreckenden, mit der Rotorvorrichtung (17) drehfest verbundenen Trägerarm (35; 61) aufweist, welcher auf seiner der Statorvorrichtung (21) zugewandten Seite eine Dichtlippe (37) und an seiner inneren Seite eine Überdeckung mit einer angrenzenden Oberfläche der Rotorvorrichtung (17) aufweist,
wobei in einem Bereich der Überdeckung des Trägerarms (35; 61) der Dichteinrichtung (32; 60) mit der Rotorvorrichtung (17) in der Oberfläche der Rotorvorrichtung (17) wenigstens eine Kühlluftöffnung (44) angeordnet ist,
wobei die Oberfläche der Rotorvorrichtung (17) im Bereich der Überdeckung mit dem Trägerarm (35; 61) der Dichteinrichtung (32; 60) zwei in axialer Richtung (A) beabstandete Auflagebereiche (39, 40) für den Trägerarm (35; 61) bildet, wobei die wenigstens eine Kühlluftöffnung (44) in axialer Richtung (A) zwischen den Auflagebereichen (39, 40) angeordnet ist, **dadurch gekennzeichnet, dass** die Rotorvorrichtung (17) außerhalb der Überdeckung des Trägerarmes (35; 61) der Dichteinrichtung (32) mit der Rotorvorrichtung (17) weitere Kühlluftöffnungen (46, 47) aufweist, über die Kühlluft in einen die Dichteinrichtung (32) umgebenden Raum führbar ist,
und wobei der Trägerarm (35) betriebszustandsabhängig in eine Position (35') verlagerbar ist,
in der ein Endbereich (41) des Trägerarms (35) zu dem stromabwärtigen Auflagebereich (40) an der Rotoroberfläche beabstandet ist und in der die Dichtlippe (37) mit einer Einlaufschicht (54) der Statorvorrichtung (21) in Anlage kommen kann.

2. Strömungsmaschine nach Anspruch 1, **dadurch gekennzeichnet, dass** zwischen den axial beabstandeten Auflagebereichen (39, 40) ein in Umfangsrichtung (U) umlaufender Kühlluftkanal (42) zwischen dem Trägerarm (35; 61) und der angrenzenden Oberfläche der Rotorvorrichtung (17) ausgebildet ist, in den die wenigstens eine Kühlluftöffnung (44) mündet.

3. Strömungsmaschine nach einem der Ansprüche 1 oder 2, **dadurch gekennzeichnet, dass** die Rotorvorrichtung (17) in Umfangsrichtung (U) verteilt mehrere Kühlluftöffnungen (44) aufweist.

4. Strömungsmaschine nach einem der Ansprüche 1 bis 3, **dadurch gekennzeichnet, dass** Anzahl und Größe der Kühlluftöffnungen (44) derart gewählt ist, dass eine thermisch bedingte maximale radiale Bewegung des Trägerarms (35; 61) der Dichteinrichtung (32; 60) in Richtung der Statorvorrichtung (21) auf ein vordefiniertes Maß begrenzbar ist.

5. Strömungsmaschine nach einem der Ansprüche 1 bis 4, **dadurch gekennzeichnet, dass** die Dichteinrichtung (32) ein separates Bauteil darstellt.

6. Strömungsmaschine nach Anspruch 5, **dadurch gekennzeichnet, dass** die Dichteinrichtung (32) zwischen Auslegern (25, 29) zweier axial hintereinander angeordneter Rotoren (20, 23) der Rotorvorrichtung (17) angeordnet ist.

7. Strömungsmaschine nach einem der Ansprüche 1 bis 4, **dadurch gekennzeichnet, dass** die Dichteinrichtung (60) integral mit einem Bauteil (25) der Rotorvorrichtung (17) ausgeführt ist.

## Claims

1. Continuous flow machine (1), in particular jet engine of an aircraft, with a rotor apparatus (17) and a stator apparatus (21), a sealing device (32; 60) being arranged between the rotor apparatus (17) and the stator apparatus (21), which sealing device (32; 60) has a carrier arm (35; 61) which extends substantially in the axial direction (A), is connected fixedly to the rotor apparatus (17) so as to rotate with it, and has a sealing lip (37) on its side which faces the stator apparatus (21) and an overlap with an adjoining surface of the rotor apparatus (17) on its inner side,
wherein at least one cooling air opening (44) is arranged in the surface of the rotor apparatus (17) in a region of the overlap of the carrier arm (35; 61) of the sealing device (32; 60) with the rotor apparatus (17),
wherein the surface of the rotor apparatus (17) forms, in the region of the overlap with the carrier arm (35; 61) of the sealing device (32; 60), two supporting regions (39, 40) for the carrier arm (35; 61) which are spaced apart in the axial direction (A), wherein the at least one cooling air opening (44) is arranged between the supporting regions (39, 40) in the axial direction (A),
**characterized in that** the rotor apparatus (17) has further cooling air openings (46, 47) outside the overlap of the carrier arm (35; 61) of the sealing device (32) with the rotor apparatus (17), via which cooling air can be conducted into a space which surrounds the sealing device (32), and wherein the carrier arm (35) is moveable, dependent on the operating state, into a position (35') in which an end region (41) of the carrier arm (35) is spaced apart from the downstream supporting region (40) on the rotor surface, and in which the sealing lip (37) can come into contact with a running-in layer (54) of the stator apparatus (21).

2. Continuous flow machine according to Claim 1, **characterized in that**, between the supporting regions (39, 40) which are spaced apart axially, a cooling air duct (42) which runs around in the circumferential direction (U) is configured between the carrier arm (35; 61) and the adjoining surface of the rotor apparatus (17), into which cooling air duct (42) the at least one cooling air opening (44) leads.

3. Continuous flow machine according to either of Claims 1 and 2, **characterized in that** the rotor apparatus (17) has a plurality of cooling air openings (44) in a manner which is distributed in the circumferential direction (U).

4. Continuous flow machine according to one of Claims 1 to 3, **characterized in that** the number and size of the cooling air openings (44) are selected in such a way that a thermally caused maximum radial movement of the carrier arm (35; 61) of the sealing device (32; 60) in the direction of the stator apparatus (21) can be restricted to a predefined magnitude.

5. Continuous flow machine according to one of Claims 1 to 4, **characterized in that** the sealing device (32) is a separate component.

6. Continuous flow machine according to Claim 5, **characterized in that** the sealing device (32) is arranged between arms (25, 29) of two rotors (20, 23) of the rotor apparatus (17) which are arranged axially behind one another.

7. Continuous flow machine according to one of Claims 1 to 4, **characterized in that** the sealing device (60) is configured integrally with a component (25) of the rotor apparatus (17).

## Revendications

1. Turbomachine (1), en particulier turboréacteur d'un avion, comprenant un dispositif de rotor (17) et un dispositif de stator (21), un dispositif d'étanchéité (32 ; 60) étant disposé entre le dispositif de rotor (17) et le dispositif de stator (21), lequel présente un bras de support (35 ; 61) s'étendant essentiellement dans la direction axiale (A), connecté de manière solidaire en rotation au dispositif de rotor (17), qui présente, sur son côté tourné vers le dispositif de stator (21), une lèvre d'étanchéité (37) et sur son côté intérieur, un recouvrement avec une surface adjacente du dispositif de rotor (17),
au moins une ouverture d'air de refroidissement (44) étant disposée dans la surface du dispositif de rotor (17) dans une région du recouvrement du bras de support (35 ; 61) du dispositif d'étanchéité (32 ; 60) avec le dispositif de rotor (17),
la surface du dispositif de rotor (17), dans la région du recouvrement avec le bras de support (35 ; 61) du dispositif d'étanchéité (32 ; 60), formant deux régions d'appui (39, 40) espacées dans la direction axiale (A) pour le bras de support (35 ; 61), l'au moins une ouverture d'air de refroidissement (44) étant disposée dans la direction axiale (A) entre les régions d'appui (39, 40),
**caractérisée en ce que**
le dispositif de rotor (17) présente, à l'extérieur du recouvrement du bras de support (35 ; 61) du dispositif d'étanchéité (32) avec le dispositif de rotor (17), des ouvertures d'air de refroidissement supplémentaires (46, 47) par le biais desquelles de l'air de refroidissement peut être guidé dans un espace entourant le dispositif d'étanchéité (32),
et le bras de support (35) pouvant être déplacé en fonction de l'état de fonctionnement dans une position (35') dans laquelle une région d'extrémité (41) du bras de support (35) est espacée de la région d'appui aval (40) au niveau de la surface du rotor
et dans laquelle la lèvre d'étanchéité (37) peut venir en appui avec une couche d'entrée (54) du dispositif de stator (21).

2. Turbomachine selon la revendication 1, **caractérisée en ce qu'**entre les régions d'appui espacées axialement (39, 40) est réalisé un canal d'air de refroidissement (42) s'étendant sur le pourtour dans la direction périphérique (U) entre les bras de support (35 ; 61) et la surface adjacente du dispositif de rotor (17), dans lequel débouche l'au moins une ouverture d'air de refroidissement (44).

3. Turbomachine selon l'une quelconque des revendications 1 et 2, **caractérisée en ce que** le dispositif de rotor (17) présente plusieurs ouvertures d'air de refroidissement (44) réparties dans la direction périphérique (U).

4. Turbomachine selon l'une quelconque des revendications 1 à 3, **caractérisée en ce que** le nombre et la taille des ouvertures d'air de refroidissement (44) sont choisis de telle sorte qu'un déplacement radial maximal du bras de support (35 ; 61) du dispositif d'étanchéité (32 ; 60), causé par la chaleur, dans la direction du dispositif de stator (21) puisse être limité à une mesure prédéfinie.

5. Turbomachine selon l'une quelconque des revendications 1 à 4, **caractérisée en ce que** le dispositif d'étanchéité (32) constitue un composant séparé.

6. Turbomachine selon la revendication 5, **caractérisée en ce que** le dispositif d'étanchéité (32) est disposé entre des bras en porte-à-faux (25, 29) de deux rotors (20, 23) du dispositif de rotor (17) disposés axialement l'un derrière l'autre.

7. Turbomachine selon l'une quelconque des revendications 1 à 4, **caractérisée en ce que** le dispositif d'étanchéité (60) est réalisé intégralement avec un composant (25) du dispositif de rotor (17).
